# EUROPÄISCHE PATENTANMELDUNG

(11) **EP 2 030 762 A1**
(43) Veröffentlichungstag der Anmeldung: **04.03.2009**
(21) Anmeldenummer: 08015192.1
(22) Anmeldetag: 28.08.2008
(51) Int. Cl.: B29C 67/00, H04R 25/00

(54) **Flexibler medizintechnischer Formkörper sowie Verfahren zu dessen Herstellung**

(30) Priorität: 31.08.2007 DE 102007041489
(71) Anmelder: DELTAMED GMBH, 61169 Friedberg (DE)
(72) Erfinder: Mesario, Emanuel, 61231 Bad Nauheim (DE)
(74) Vertreter: Metten, Karl-Heinz

(57) **Zusammenfassung**

Die vorliegende Erfindung betrifft ein Verfahren zur Herstellung von zumindest bereichsweise flexiblen dreidimensionalen medizintechnischen Formkörpern, insbesondere von Ohrpassstücken oder Bestandteilen hiervon, umfassend die Schritte
a) Herstellen eines zumindest bereichsweise flexiblen dreidimensionalen Formteils mittels eines generativen Rapid Prototyping-Verfahrens unter Verwendung mindestens einer verfestigbaren ersten Formulierung,
b) Versehen zumindest eines Teils des dreidimensionalen Formteils mit mindestens einer verfestigbaren flexiblen Beschichtung unter Verwendung mindestens einer verfestigbaren zweiten Formulierung und
c) Verfestigen der in Schritt b) erhaltenen Beschichtung.

## Beschreibung

Die vorliegende Erfindung betrifft ein Verfahren zur Herstellung eines zumindest bereichsweise flexiblen, dreidimensionalen medizintechnischen Formkörpers, einen nach diesem Verfahren erhältlichen Formkörper sowie die Verwendung desselben als Ohrpassstück oder als Bestandteil hiervon.

Dentale wie auch otoplastische Formteile werden heutzutage vermehrt unter Einsatz des Rapid Prototyping hergestellt. Unter Rapid Prototyping fasst man Verfahren zusammen, die rechnergestützt aus CAD-Modelldaten dreidimensionaler Objekte schichtweise ein Duplikat eines solchen Modells mit Hilfe von z.B. Druck-, Fräs-, Schneid- oder Belichtungsprozessen herstellen. Ein mittlerweile etabliertes Rapid Prototyping Verfahren ist die Stereolithographie. Basierend auf zweidimensionalen Schichtdaten eines dreidimensionalen CAD-Modells erhält man hierbei einen dreidimensionalen Formkörper aus einem ursprünglich flüssigen Polymermaterial. Das zu polymerisierende Material wird zwecks Aushärtung schichtweise mit einem Laser abgefahren. Die sukzessive schichtweise Auftragung individueller Schichten liefert das fertige Produkt. Das heißt in der Stereolithographie werden Daten, die das dreidimensionale Objekt repräsentieren, als zweidimensionale Schichtdaten eingegeben, die Querschnitte des Objekts wiedergeben. Während der schichtweisen Aushärtung werden die aufeinanderfolgenden Schichten mit zuvor geformten Schichten zu einem integralen dreidimensionalen Formkörper verbunden. Exemplarisch sei diesbezüglich auf die Offenbarung der US 4,575,330 verwiesen.

Ein modifiziertes Maskenbelichtungstechnik-Verfahren entnimmt man der WO 2005/110722 A1, gemäß dem ein dreidimensionales Objekt mit verbesserter Auflösung mittels Pixel-Shifts erhältlich sein soll. Bei der schichtweisen Verfestigung eines photohärtenden Materials mit Hilfe der Maskenbelichtungstechnik wird hierbei im Subpixelbereich pro Schicht eine Mehrfachbelichtung vorgenommen. Auf diese Weise sollen die Schichtübergänge weniger ausgeprägt und eine glattere Oberfläche zugänglich sein.

Konventionelle kommerziell erhältliche Zusammensetzungen für die Stereolithographie und die Maskenbelichtungstechnik führen im ausgehärteten Zustand zu relativ harten und starren Formkörpern, die mitunter auch sehr spröde sind. Zu einer rauhen Oberflächenstruktur trägt auch der schichtweise Aufbau als solcher bei, der je nach Formgebung und Schichtdicke zu einer Vielzahl kleiner Kanten und Stufen führen kann. Um gleichwohl glatte, durchgängige Oberflächen zu erhalten, haben derartige Formkörper in einem letzten Prozessschritt zumeist poliert zu werden. Insbesondere bei kleineren, mit Hilfe des Rapid Prototyping erhaltenen Formkörpern geht jedoch mit jedem Poliervorgang die Gefahr der Teil- oder gar vollständigen Zerstörung einher. Des weiteren sind regelmäßig durch den Poliervorgang insbesondere bei kleineren Bauteilen Einbußen hinsichtlich der Dimensionierung und exakten Wiedergabe einer vorgegebenen dreidimensionalen Struktur in Kauf zu nehmen.

Gemäß der DE 10 2004 034 416 A1 liefern konventionelle Ausgangsmaterialien für die Stereolithographie nicht nur harte und spröde Produkte, sondern sind häufig auch nicht ausreichend bioverträglich bzw. biokompatibel, was insbesondere auf Epoxid-Harze zutreffen würde. Formkörper mit flexiblen, elastischen Materialeigenschaften lassen sich gemäß der DE 10 2004 034 416 A1 stereolithographisch dann erhalten, wenn man auf eine Zusammensetzung zurückgreift, die aus 5 bis 99 Gewichtsprozent an di- oder polyfunktionellen Polyether(meth)acrylat-Verbindungen mit einem Molekulargewicht von mehr als 1000 g/mol, 1 bis 90 Gewichtsprozent an einer mono-, di- oder polyfunktionellen, strahlungshärtenden (Meth)acrylat-Verbindung mit einem Molekulargewicht von weniger als 1000 g/mol als Reaktivkomponente, 0,05 bis 10 Gewichtsprozent an einem radikalbildenden Photoinitiator und 0,001 bis 5,0 Gewichtsprozent an weiteren Komponenten besteht.

Flexible Medizinprodukte, die vorzugsweise eine Dehnung größer 10 % aufweisen, lassen sich gemäß der DE 10 2004 050 868 A1 stereolithographisch dann erhalten, wenn man eine niedrigviskose, strahlungshärtbare Formulierung verwendet, enthaltend 15 bis 60 Gewichtsprozent an monomeren oder oligomeren Dimethacrylaten auf Basis von Bisphenol A oder Bisphenol F, 2 bis 25 Gewichtsprozent an monomeren aliphatischen oder cycloaliphatischen Dimethacrylaten mit einer Viskosität kleiner 3 Pa.s, 2 bis 35 Gewichtsprozent an Iminooxadiazon-Derivaten, enthaltend drei Methacrylat- und/ oder Acrylat-Funktionen, und 0,5 bis 6 Gewichtsprozent an Photoinitiatoren. Bevorzugt sind in der genannten Formulierung weiterhin aliphatische oder cycloaliphatische monomere oder oligomere Urethan(meth)acrylate mit einer Funktionalität kleiner 4 und einer Viskosität kleiner 15 Pa.s und einem Molekulargewicht kleiner 2000 sowie monofunktionelle Methacrylate mit einer Viskosität kleiner 3 Pa.s zugegen. Die in der DE 10 2004 034 416 A1 und DE 10 2004 050 868 A1 beschriebenen, mittels Stereolithographie erhältlichen Formkörper finden insbesondere als Ohrpassstücke, Verwendung.

Gemäß der DE 10 2005 050 186 A1 lassen sich flexible Medizinprodukte, beispielsweise Ohrpassstücke, ähnlich denen in der DE 10 2004 050 868 A1 beschriebenen, dadurch erhalten, dass man die strahlungshärtbaren Ausgangsformulierungen zusätzlich mit antimikrobiellen Zusätzen aus der Gruppe antimikrobiell wirksamer Glasfüller oder Silberpartikel versetzt.

Die Notwendigkeit zur Nachbehandlung stereolithographisch erhaltener Formkörper wird auch in der DE 100 18 987 A1 hervorgehoben. Zur Vermeidung von Vorsprüngen und Protuberanzen wird in der DE 100 18 987 A1 ein verbessertes Plot-Verfahren vorgeschlagen.

Die EP 562 826 A1 stellt fest, dass stereolithographisch aus herkömmlichen Acrylatester-Formulierungen erhaltene Produkte mitunter sehr spröde und daher mechanisch nicht sehr belastbar sind. Harte, feste Formteile, die gleichwohl nicht spröde sind, lassen sich gemäß der EP 562 826 A1 unter Verwendung von strahlungshärtbaren Formulierungen erhalten, umfassend a) eine Mischung an Urethandiacrylaten mit einer Viskosität von mindestens 500.000 mPa.s (25°C) in einer Menge zwischen 10 und 40 Gewichtsprozent und einem zweiten Diacrylatprepolymer mit einer Viskosität zwischen 500 und 50.000 mPa.s in einer Menge von mindestens 15 Gewichtsprozent, b) einem Monoacrylatmonomer ausgewählt aus der Gruppe bestehend aus Isobornylacrylat, Beta-Carboxyethylacrylat oder Mischungen derselben in einer Menge von mindestens 5 Gewichtsprozent, und c) einem Radikalinitiator, wobei die beschriebene Formulierung eine Viskosität kleiner 10000 mPa.s (25°C) zu haben hat.

Gemäß der DE 101 14 290 A1 lassen sich auch geeignete Dentalprodukte mittels 3D-Plott-Technologie durch schichtweises Auftragen von Mikrosträngen oder Mikrotropfen aus Mischungen schmelzbarer, polymerisierbarer, polykondensierbarer, polyaddierbarer oder thermisch oder mit Strahlung härtbarer Monomere, Oligomere oder Polymere erhalten. Das in der DE 101 14 290 A1 beschriebene 3D-Plott-Verfahren soll im Gegensatz zu gängigen Rapid Prototyping-Verfahren Formteile aus unterschiedlichen Materialien, gegebenenfalls auch nach einem Gradientenmuster, zugänglich machen.

Gemäß der DE 10 2005 50 85 A1 lassen sich Ohrpassstücke mittels der 3D-Print-Technik, die sich durch eine hohe thermische Stabilität auszeichnen, durch Verwendung von Harzformulierungen erhalten, die vorzugsweise a) 40 bis 80 Gewichtsprozent eines ethoxylierten Bisphenol-A-Dimethacrylats, 5 bis 25 Gewichtsprozent eines monomeren aliphatischen oder cycloaliphatischen Dimethacrylat und 0,5 bis 5 Gewichtsprozent an Photoinitiatoren enthalten. Bei der hier zur Anwendung kommenden 3D-Print-Technologie werden über elektrostatische Tintenstrahldüsen an der Luft aushärtbare oder erstarrende Modell- und Stützmaterialien auf eine Plattform aufgebracht. Nach dem Auftrag wird das Material mittels aktinischer Strahlung im 3D-Printer schichtweise an- bzw. ausgehärtet.

In der WO 2006/042515 A1 wird ein Verfahren zur Herstellung von Ohrpassstücken mit heterogenen Materialeigenschaften auf der Basis der 3D-Print-Technology beschrieben. Hierbei werden mindestens zwei Modellmaterialien und mindestens ein Stützmaterial schicht- bzw. strangweise über eine rechnergesteuerte Auftragvorrichtung auf einer Unterlage aufgetragen. Vor dem Aushärten der einzelnen Stränge bzw. Schichten werden diese mit einem sogenannten "Planarizer" geglättet.

Hartelastische, mittels Stereolithographie erhältliche Ohrpassstücke lassen sich gemäß der WO 2005/001570 A1 durch Verwendung von biokompatiblen, niedrigviskosen, strahlungshärtbaren Formulierungen erhalten, die insbesondere 60 bis 90 Gewichtsprozent eines ein- bis zehnfach ethoxylierten Bisphenol-A-Dimethacrylats, 5 bis 70 Gewichtsprozent eines aliphatischen oder cycloaliphatischen Urethanmethacrylats mit einer Funktionalität kleiner 4 und einer Viskosität kleiner 10 Pa.s, 3 bis 10 Gewichtsprozent eines monomeren aliphatischen oder cycloaliphatischen Dimethacrylats mit einer Viskosität kleiner 3 Pa.s, 2 bis 10 Gewichtsprozent eines monofunktionellen Methacrylats mit einer Viskosität kleiner 3 Pa.s, 1 bis 4 Gewichtsprozent an Photoinitiatoren und 0,005 bis 0,05 Gewichtsprozent des Inhibitors 2,2,6,6-Tetramethylpiperidin-1-yloxy enthalten.

Dentale Formteile, die sich durch eine sehr gute Biegefestigkeit auszeichnen, sind gemäß der US 5,502,087 bei Verwendung solcher strahlungshärtbaren Formulierungen zugänglich, welche unter anderem Urethan(meth)acrylat-Harze enthalten, die mit Polyester- oder Polyethereinheiten ausgestattet sind.

Dentale Formteile auf Kompositbasis, die eine verringerte Bruchanfälligkeit bei gleichzeitig hoher Formstabilität aufweisen, erhält man gemäß der DE 199 61 341 A1 bei Verwendung strahlungshärtbarer Zusammensetzungen, enthaltend 14 bis 60 Gewichtsprozent an Füllstoffen, 3 bis 35 Gewichtsprozent an einfach oder mehrfach ethylenisch ungesättigten Verbindungen, die kein Urethan(meth)acrylat darstellen, 0,1 bis 5 Gewichtsprozent an einem Initiatorsystem, befähigt eine radikalische Reaktion zu starten, 1 bis 40 Gewichtsprozent an Weichmachern und 30 bis 81,9 Gewichtsprozent an mindestens zwei Urethan(meth)acrylaten mit unterschiedlichem Molekulargewicht, wobei diese in einem Gewichtsverhältnis von 1,5 : 1 bis 50 : 1 vorzuliegen haben.

Zur Verbesserung von Otoplastiken werden in der DE 100 09 477 A1 und der DE 200 01 202 U1 Ormocer-Lacke vorgeschlagen. Ormocer-Lacke gehen zurück auf anorganisch-organische Hybridpolymere, die üblicherweise mittels der Sol-Gel-Methode hergestellt werden.

Es wäre nun wünschenswert, auf, insbesondere kleinteilige, medizintechnische Formteile zurückgreifen zu können, die zumindest bereichsweise flexible Materialeigenschaften besitzen und gleichwohl mittels Rapid Prototyping in der Massenfertigung herstellbar sind.

Der vorliegenden Erfindung lag somit die Aufgabe zugrunde, medizintechnische dreidimensionale Produkte zur Verfügung zu stellen, die nicht mit den Nachteilen des Stands der Technik behaftet sind und die insbesondere zumindest bereichsweise flexible Materialeigenschaften aufweisen, ohne haptische Beeinträchtigungen und/oder sonstige Oberflächenmängel in Kauf nehmen zu müssen, und die zudem auf kostengünstige und zuverlässige Weise auch in der Massenfertigung mittels Rapid Prototyping zugänglich sind und, insbesondere dauerhaft, einen hohen Tragekomfort sicherstellen.

Demgemäß wurde ein Verfahren zur Herstellung eines zumindest bereichsweise, insbesondere vollständig, flexiblen, dreidimensionalen medizintechnische Formköpers, gefunden, umfassend die Schritte
a) Herstellen eines zumindest bereichsweise, insbesondere vollständig, flexiblen, dreidimensionalen Formteils mittels eines generativen Rapid Prototyping-Verfahrens unter Verwendung mindestens einer verfestigbaren ersten Formulierung,
b) Versehen zumindest eines Teils des, insbesondere des gesamten, dreidimensionalen Formteils mit mindestens einer verfestigbaren flexiblen Beschichtung unter Verwendung mindestens einer zweiten Formulierung und
c) Verfestigen der in Schritt b) erhaltenen Beschichtung.

Grundsätzlich können alle unter den Oberbegriff "Rapid Prototyping" fallenden Prozesse bei dem erfindungsgemäßen Verfahren zum Einsatz kommen. Bevorzugt wird auf lithographische, insbesondere stereolithographische Verfahren zurückgegriffen. Bei der Stereolithographie werden flüssige oder pastöse strahlungshärtbare Zusammensetzungen mittels aktinischer Strahlung, vorzugsweise UV-Laserstrahlung, schichtweise gemäß den Vorgaben eines dreidimensionalen CAD-Modells erhärtet bzw. verfestigt. Dieser Prozess des schichtweisen Verfestigens einer flüssigen bzw. pastösen strahlungshärtbaren Zusammensetzung, z.B. Photopolymerisierbare Monomere oder Präpolymere, wird solange wiederholt, bis das gewünschte Formteil fertiggestellt ist. Für die Bestrahlung stehen unter anderem Projektionseinheiten, z.B. auf Basis DLP/DMD, LCD, ILA, usw., LC-Displays (reflexiv und transmissiv), LED- bzw. Laser-Dioden-Zeile/-Matrix, die vorzugsweise in XY-Richtung über die Schicht bewegt wird, und auf der MEMS's Technologie (light valve) basierende Zeile oder Matrix, die vorzugsweise in XY-Richtung über die Schicht bewegt wird, zur Verfügung. Während bei Einsatz einer Strahlungsquelle, die ein breitbandiges, kontinuierliches Spektrum ausstrahlt, vorzugsweise darauf geachtet werden sollte, daß eine einheitliche Projektionsachse für jeden Belichtungsvorgang beibehalten wird, ist dieses naturgemäß bei Einsatz einer Laser-Strahlungsquelle nicht unbedingt erforderlich. Besonders bewährt hat sich hierbei der Einsatz von UV-Laserstrahlung. Gegebenenfalls kann man das z.B. stereolithographisch oder gemäß DLP-Maskentechnik gemäß Schritt a) erhaltene Formteil, insbesondere nach einem Reinigungsschritt, durch Bestrahlung mit Laserlicht, insbesondere UV-Laserstrahlung, beispielsweise in einer UV-Kammer, nachvernetzen, um so, sofern erforderlich, einen nahezu vollständigen oder vollständigen Polymerisationsgrad zu erhalten. Details zur stereolithographischen Herstellung von Formkörpern sind dem Fachmann bekannt und können zum Beispiel auch der Offenbarung der US 4,575,330 entnommen werden. Besonders bevorzugt kommt bei dem erfindungsgemäßen Verfahren in Verfahrensschritt a) als Rapid Prototyping-Verfahren das DLP Maskentechnik-Verfahren zum Einsatz.

Das DLP Maskentechnik-Verfahren funktioniert ähnlich dem stereolithographischen Verfahren. Im Unterschied hierzu kommt regelmäßig kein Laser als Strahlungsquelle zum Einsatz, vielmehr reicht die Strahlung einer Strahlungsquelle mit einem kontinuierlichen oder einem Mehrwellenlängenspektrum aus. Das DLP-Maskentechnik-Verfahren basiert auf dem Prinzip der Maskenbelichtung mittels Photopolymerisation. Bei der DLP (Digital Light Processing)-Technik kommt im allgemeinen ein sogenannter DMD-Chip (Digitial Mircomirror Device) zum Einsatz, auf dem eine Vielzahl winziger Spiegel vorliegen, die individuell angesteuert werden können. Beispielsweise können auf einem solchen DMD-Chip mehr als 1 Millionen oder sogar mehr als 1,5 Millionen Einzelspiegel vorliegen, z.B. mit einer Kantenlänge von etwa 12 nm. Durch die Neigung der einzelnen Mikro-Spiegel auf dem DMD-Chip wird das eingestrahlte Licht entweder direkt zu der zu belichtenden verfestigbaren Formulierung, gegebenenfalls über eine entsprechende Optik, geleitet, oder aber zu einem Absorber. Über die Ansteuerung der einzelnen Spiegel auf dem DMD-Chip kann somit für jede photochemisch auszuhärtende Schicht eine Fläche mit einer vorab definierten Umrissform in einem einzigen Arbeitsgang bestrahlt werden. Der DLP-Projektor bzw. der DMD-Chip wurden von Texas Instruments entwickelt. Geeignete DLP-Belichtungsgeräte sind kommerziell erhältich.

Neben den lithographischen Verfahren kann auch auf das Laser-Sinter-Verfahren, das Thermojet-Verfahren, das 3D-Print-Verfahren, das Schicht-Laminat-Verfahren (Layer Laminate Manufacturing), dass Extrusions-Verfahren (Fused Layer Modelling) oder das 3D-Plottverfahren zurückgegriffen werden.

Beim Laser-Sinter-Verfahren schmilzt man im allgemeinen pulverförmiges Ausgangsmaterial mit einem Laserstrahl lokal auf. Beim Abkühlen erstarren die aufgeschmolzenen Areale unter Ausbildung einer festen Schicht. Durch Wiederholung dieses Vorgangs erhält man eine dreidimensionale Struktur nach den Vorgaben eines dreidimensionalen CAD-Models.

Beim Schicht-Laminatverfahren (LLM) werden im allgemeinen Schichtkonturen mittels eines Lasers oder eines Schneidplotters aus z.B. Kunststofffolien ausgeschnitten und automatisch miteinander verklebt.

Das Extrusions-Verfahren, auch Fused Laser Modelling (FLM) genannt, macht sich das lokale Anschmelzen thermoplastischer Materialien zu nutze, die anschließend zwecks Ausbildung einer Schicht oder eines Stranges extrudiert werden. Beim Fused Deposition Modelling (FDM) wird ein in Drahtform vorliegendes thermoplastisches Material in einer beheizten Düse aufgeschmolzen und hierdurch extrudiert.

Die 3D-Print-Technologie bedient sich regelmäßig eines pulverförmigen Ausgangsmaterials, das durch Einspritzen eines Binders lokal verklebt wird.

Bei den erfindungsgemäßen Verfahren kommen vorzugsweise verfestigbare erste Formulierungen zum Einsatz, die bei Raumtemperatur flüssig oder pastös sind und mittels aktinischer Strahlung und/oder Wärme verfestigbar sind. In einer weiteren Ausführungsform kann vorgesehen sein, dass die erste Formulierung und/oder die zweite Formulierung mittels aktinischer Strahlung, Wärmezufuhr, Abkühlens, Radikalinitiatoren, Luft und/oder Wasser verfestigt wird. Hierbei ist besonders bevorzugt, dass die erste Formulierung und/oder die zweite Formulierung mittels aktinischer Strahlung verfestigt werden. Vorzugsweise werden sowohl die erste als auch die zweite Formulierung mittels aktinischer Strahlung verfestigt.

Die die Beschichtung bildende zweite Formulierung kann darüber hinaus auch mittels Lufthärtung oder Kondensationshärtung, beispielsweise initiiert durch Wasser, verfestigt werden.

Die durchschnittliche Dicke der bei einem einzelnen Aushärtschritt aus den verfestigbaren Massen gebildeten Schicht kann je nach den eingesetzten aushärtbaren Massen und/oder der beaufschlagten Strahlung in weiten Bereichen variieren und liegt vorzugsweise im Bereich von 1 µm bis 250 µm, vorzugsweise im Bereich von 5 µm bis 100 µm. Selbstverständlich können die aufeinander folgenden Schichten nicht nur jeweils eine einheitliche Schichtstärke aufweisen. Vielmehr können innerhalb eines zu bildenden Formteils die Schichtdicken für die auszuhärtenden Schichten beliebig in den jeweils technisch realisierbaren Grenzen gewählt werden.

Gemäß einem weiteren Aspekt des erfindungsgemäßen Verfahrens kann vorgesehen sein, dass mindestens eine, insbesondere die Mehrzahl der ausgehärteten verfestigbaren Massen Füllstoffe enthalten. Dabei kann vorgesehen sein, daß die Füllstoffe partiell oder vollständig beschichtet, insbesondere silanisiert, sind.

Die Vorrichtungen zur schichtweisen generativen Herstellung von dreidimensionalen Formteilen umfassen im allgemeinen einen Datenspeicher zur Abspeicherung von Daten, insbesondere CAD-Daten, die ein dreidimensionales Objekt wiedergeben. Derartige Datenspeicher sowie die Implementierung geeigneter Datensätze für dreidimensionale Objekte in diesen Datenspeichern sind dem Fachmann bekannt. Derartige Vorrichtungen sind im allgemeinen ferner ausgestattet mit einer Datenverarbeitungseinrichtung, die ausgelegt ist, Daten, die für die dreidimensionale Darstellung eines Objektes in einem Datenspeicher hinterlegt sind, zu empfangen und in Daten für einen schichtweisen Aufbau dieses Formteils umzuwandeln, und die geeignet und ausgelegt ist, die von der Strahlungsquelle abstrahlbare Strahlung derart zu manipulieren oder einzustellen, dass ein Strahlungsmuster aussendbar ist, das jeweils mit den für eine aus den verfestigbaren Massen aufzubauende Schicht ermittelten Daten korreliert, so dass auf dem Träger und/oder auf dem auf dem Träger vorliegenden Formteil eine Schicht aus verfestigbaren Massen in der von der Datenverarbeitungseinrichtung ermittelten Form haftend verfestigbar ist.

In einer Ausgestaltung kann vorgesehen sein, dass die Strahlungsquelle mit einer Projektionseinheit, z.B. auf der Basis DLP/DMD, LCD und ILA, ausgestattet ist, über die die Umrisskontur der jeweils aus den verfestigbaren Massen auszuhärtenden Schicht festlegbar ist. Auf diese Weise gelingt eine für jede einzelne aufzutragende Schicht charakteristische Maskenbelichtung. Eine Strahlungsquelle im Sinne der vorliegenden Erfindung umfasst damit auch eine solche, vorzugsweise über eine Datenverarbeitung ansteuerbare, Einheit, die für jeden Bestrahlungs- bzw. Aushärtvorgang die für die jeweils aufzubauende Schicht erforderliche Belichtungsmaske erzeugt bzw. bereitstellen oder bereitstellen kann. Derartige Strahlungsquellen sind im Handel erhältlich.

Das Beschichten des in Verfahrensschritt a) erhaltenen Formteils geschieht vorzugsweise mittels Besprühens, Eintauchens, Übergießens und/oder Bestreichens oder dergleichen. Als besonders zuverlässige und praktikable Beschichtungsmethode hat sich hierbei das Bestreichen und das Eintauchen bewährt. Die verfestigbaren Formulierungen, die in den Verfahrenschritten a) und b) zum Einsatz kommen, werden derart aufeinander eingestellt, dass auch noch nach dem Verfestigungsschritt c) ein Formkörper mit flexiblen, elastischen Materialeigenschaften resultiert. Besonders bevorzugte Ausführungsformen stellen sich regelmäßig dadurch ein, dass die flexible Beschichtung in Schritt b) unter Verwendung einer zweiten Formulierung, umfassend die, vorzugsweise bestehend aus der, in Schritt a) verwendete(n) erste(n) Formulierung gebildet wird. Dabei sind solche Ausführungsformen von Vorteil, bei denen die Shore A Härte des Formteils gemäß Schritt a) und/oder der Beschichtung gemäß den Schritten b) und c) kleiner 100, vorzugsweise kleiner 95, besonders bevorzugt kleiner 75 und insbesondere kleiner 60 ist. Vorteilhafterweise verfügen sowohl das Formteil gemäß Schritt a) als auch die Beschichtung gemäß den Schritten b) und c) über eine Shore A Härte kleiner 100, vorzugsweise kleiner 95, besonders bevorzugt kleiner 75 und insbesondere kleiner 60. Die nach dem erfindungsgemäßen Verfahren erhältlichen Formteile zeigen dann ein besonders vorteilhaftes Eigenschaftsprofil, wenn Obacht darauf verwendet wird, dass die Flexibilität des Formteils gemäß Schritt a) und der Beschichtung gemäß den Schritten b) und c) im wesentlichen übereinstimmt. Gemäß einer Weiterentwicklung des erfindungsgemäßen Verfahrens ist vorgesehen, dass die für die Herstellung des Formteils in Schritt a) und/oder für die Beschichtung in b) ausgewählten ersten bzw. zweiten Formulierungen im verfestigten Zustand federelastische Materialeigenschaften besitzen. Flexibel bzw. elastisch im Sinne der vorliegenden Erfindung sollen solche Formteile bzw. Beschichtungen sein, die im verfestigten bzw. ausgehärteten Zustand nachgiebig bzw. plastisch verformbar sind. Unter federelastischen Formteilen gemäß Schritt a) und federelastischen Beschichtungen gemäß Schritt b) und c) sollen erfindungsgemäß solche Systeme verstanden werden, die nachgiebig bzw. plastisch verformbar sind und darüber hinaus partiell oder vollständig in den ursprünglichen Zustand zurückkehren, d.h. über ein Rückstellvermögen verfügen. Hierbei sollen sowohl solche verfestigen Materialien umfasst sein, die sehr schnell vollständig oder teilweise in den Zustand vor der federelastischen Beanspruchung zurückkehren als auch solche, bei denen dieser Prozess langsamer erfolgt.

Besonders geeignete verfestigbare erste und/oder zweite Formulierungen, die das vorangehend geschilderte Eigenschaftsprofil liefern, umfassen
a) mindestens ein Polyester- und/oder Polyetherurethan(meth)acrylat und/oder
b) mindestens ein monomeres oder oligomeres Di(meth)acrylat auf der Basis von Bisphenol A oder Bisphenol F sowie
c) mindestens ein monofunktionelles (Meth)acrylat und
d) mindestens einen Photoinitiator und optional
e) mindestens einen Zusatzstoff umfasst.

Geeignete Zusatzstoffe können beispielsweise ausgewählt werden unter Pigmenten, Dispergiermitteln, Haftvermittlern, Verlaufsmitteln, Lösungsmitteln, Entschäumern, Flammschutzmitteln, Filmbildnern, Stabilisatoren, Farbstoffen, Antioxidantien, Polymerisationsinhibitoren, Korrosionsinhibitoren, Antistatika, Glanzverbesserungsmitteln, Lichtschutzmitteln, Rheologieadditiven, Füllstoffen und dergleichen.

Hierbei sind solche verfestigbaren ersten und/oder zweiten Formulierungen besonders bevorzugt, bei denen die Komponente a) mindestens ein Polyesterurethanacrylat, die Komponente b) ein zwei- bis zehnfach ethoxyliertes Bisphenol-A-Dimethacrylat oder eine beliebige Mischung solcher Dimethacrylate, die Komponente c) Tetrahydrofurfurylmethacrylat und/oder die Komponente d) mindestens ein Phosphinoxyd-Derivat darstellen.

In einer besonders bevorzugten Ausführungsform ist dabei vorgesehen, dass die verfestigbare erste und/oder zweite Formulierung die verfestigbare Formulierung etwa 40 bis 70 Gewichtsprozent an Komponente a), etwa 5 bis 30 Gewichtsprozent an Komponente b), etwa 20 bis 40 Gewichtsprozent an Komponente c), etwa und 0,1 bis 2 Gewichtsprozent an Komponente d) und etwa 0 bis 20 Gewichtsprozent an Komponente e) enthält, wobei die Summe der Komponenten a) bis e) stets 100 Gewichtsprozent ergibt.

Zum Aushärten bzw. Verfestigen der in den Schritten b) und c) eingesetzten Formulierungen mittels Strahlung greift man in der Regel auf Röntgen-, UV-, VIS- und/oder IR-Strahlung zurück. Hierbei sind Strahlungsquellen, die ein kontinuierliches, breitbandiges Spektrum ausstrahlen ebenso geeignet wie Laser-Strahlungsquellen. Mittels Strahlungsbeaufschlagung können die verfestigbaren Massen, je nach Wahl der Ausgangskomponenten, z.B. unter Polymerisation, Polykondensation, Polyaddition und/oder thermisch aushärten.

Besonders bevorzugt ist vorgesehen, dass die Verfestigung der Beschichtung in Schritt c) zumindest bereichsweise und/oder intervallweise inhibitionsfrei oder im wesentlichen inhibitionsfrei erfolgt. In diesem Zusammenhang stellen sich besonders zufriedenstellende Resultate in Bezug auf eine als äußerst angenehm empfundene Haptik dann ein, wenn die in Schritt b) aufgetragene Beschichtung unter Ausschluss einer unter den Verfestigungsbedingungen zur Oxidation befähigten Verbindung, insbesondere unter Ausschluss von Sauerstoff, durchgeführt wird. Die Oberflächen der auf diese Weise erhaltenen Formkörper werden auf besonders zuverlässige Art und Weise nicht als haftend oder klebrig empfunden. Geeignete inhibitionsfreie Verfestigungsbedingungen erhält man beispielsweise dadurch, dass die Verfestigung der Beschichtung unter einer Inertgasatmosphäre oder in einer inerten Flüssigkeit, insbesondere enthaltend Glycerin, erfolgt. Geeignete inerte Flüssigkeitssysteme können z.B. neben Glycerin auch Wasser und gegebenenfalls thixotrope Zusatzstoffe enthalten. Als geeignete Inertgase kommen zum Beispiel Stickstoff, Helium oder Argon in Frage. Inerte Flüssigkeiten werden vorzugsweise vor deren Verwendung mit Ultraschall behandelt.

Bei den mit dem erfindungsgemäßen Verfahren erhältlichen medizintechnischen Formkörpern handelt es sich vorzugsweise solche, die bei oder im Zusammenhang mit Hörgeräten zum Einsatz kommen. Hierbei handelt es sich z.B. um Bauteile, die im Gehörgang, in und/oder an der Ohrmuschel oder im Ohr eingesetzt werden. Derartige Bauteile umfassen Ohrpassstücke, Otoplastiken, Ohrschalen, Schläuche, Clips oder Bestandteile hiervon.

Die verfestigbaren Massen weisen in einer zweckmäßigen Ausgestaltung mindestens einen pharmazeutischen und/oder antimikrobiellen Wirkstoff auf. Derartige Formteile können demnach in der Weise ausgeführt sein, dass sie einen pharmazeutischen und/oder antibakteriellen Wirkstoff freisetzen.

Der vorliegenden Erfindung liegt die überraschende Erkenntnis zu Grunde, dass sich mittels Rapid Prototyping dreidimensionale Formteile kostengünstig und zuverlässig herstellen lassen, die ein flexibles Materialeigenschaftsprofil aufweisen und die gleichwohl als medizintechnisches Produkt geeignet sind. Als besonders vorteilhaft haben sich zudem die glatten Oberflächen der mit dem erfindungsgemäßen Verfahren erhältlichen Formteile erwiesen, die man ohne zusätzliche Polier- oder Schleifschritte erhält. Die erfindungsgemäßen dreidimensionalen Formkörper, beispielsweise otoplastische Formteile, gewährleisten einen sehr hohen Tragekomfort, insbesondere da deren Oberflächen nicht nur als weich und äußerst glatt, sondern ebenfalls als nicht klebend oder haftend empfunden werden.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zur Herstellung von zumindest bereichsweise flexiblen dreidimensionalen medizintechnischen Formkörpern, insbesondere von Ohrpassstücken oder Bestandteilen hiervon, umfassend die Schritte
a) Herstellen eines zumindest bereichsweise flexiblen dreidimensionalen Formteils mittels eines generativen Rapid Prototyping-Verfahrens unter Verwendung mindestens einer verfestigbaren ersten Formulierung,
b) Versehen zumindest eines Teils des dreidimensionalen Formteils mit mindestens einer verfestigbaren flexiblen Beschichtung unter Verwendung mindestens einer verfestigbaren zweiten Formulierung und
c) Verfestigen der in Schritt b) erhaltenen Beschichtung.

2. Verfahren nach Anspruch 1, **dadurch gekennzeichnet, dass** das Rapid Prototyping-Verfahren lithographische, insbesondere stereolithografische, Verfahren, Laser-Sinter-Verfahren, Schicht-Laminat-Verfahren (Layer Laminate Manufacturing), Thermojet-Verfahren, Extrusions-Verfahren (Fused Layer Modeling), 3D-Print-Verfahren, DLP-Markentechnik-Verfahren oder 3D-Plott-Verfahren umfasst.

3. Verfahren nach Anspruch 2, **dadurch gekennzeichnet, dass** Rapid Prototyping-Verfahren ein DLP-Maskentechnik-Verfahren darstellt.

4. Verfahren nach einem der vorangehenden Ansprüche, **dadurch gekennzeichnet, dass** das Beschichten in Schritt b) mittels Besprühens, Eintauchens, Übergießens und/oder Bestreichens oder dergleichen erfolgt.

5. Verfahren nach einem der vorangehenden Ansprüche, **dadurch gekennzeichnet, dass** die verfestigbare erste Formulierung bei Raumtemperatur flüssig oder pastös ist und mittels aktinischer Strahlung und/oder Wärme verfestigbar ist.

6. Verfahren nach einem der vorangehenden Ansprüche, **dadurch gekennzeichnet, dass** die erste Formulierung und/oder die zweite Formulierung mittels aktinischer Strahlung, Wärmezufuhr, Abkühlens, Radikalinitiatoren, Luft und/oder Wasser verfestigt wird bzw. werden.

7. Verfahren nach Anspruch 6, **dadurch gekennzeichnet, dass** die erste Formulierung und/oder die zweite Formulierung mittels aktinischer Strahlung verfestigt werden.

8. Verfahren nach einem der vorangehenden Ansprüche, **dadurch gekennzeichnet, dass** die flexible Beschichtung in Schritt b) unter Verwendung einer zweiten Formulierung, umfassend die, vorzugsweise bestehend aus der, in Schritt a) verwendete(n) erste(n) Formulierung gebildet wird.

9. Verfahren nach einem der vorangehenden Ansprüche, **dadurch gekennzeichnet, dass** die Shore A Härte des Formteils gemäß Schritt a) und/oder der Beschichtung gemäß den Schritten b) und c) kleiner 100, insbesondere kleiner 75, ist.

10. Verfahren nach einem der vorangehenden Ansprüche, **dadurch gekennzeichnet, dass** die Flexibilität des Formteils gemäß Schritt a) und der Beschichtung gemäß den Schritten b) und c) im wesentlichen übereinstimmt.

11. Verfahren nach einem der vorangehenden Ansprüche, **dadurch gekennzeichnet, dass** die für die Herstellung des Formteils in Schritt a) und/oder für die Beschichtung in Schritt b) verwendeten ersten bzw. zweiten Formulierungen im verfestigten Zustand, insbesondere übereinstimmende, federelastische Materialeigenschaften besitzen.

12. Verfahren nach einem der vorangehenden Ansprüche, **dadurch gekennzeichnet, dass** in Schritt c) die Beschichtung durch Bestrahlung mit Röntgen-, UV-, VIS- und/oder IR-Strahlung verfestigt wird.

13. Verfahren nach einem der vorangehend genannten Ansprüche, **dadurch gekennzeichnet, dass**
zumindest die Verfestigung der Beschichtung in Schritt c) zumindest bereichsweise und/oder intervallweise inhibitionsfrei oder im wesentlichen inhibitionsfrei erfolgt.

14. Verfahren nach einem der vorangehend genannten Ansprüche, **dadurch gekennzeichnet, dass**
die Verfestigung der Beschichtung unter Ausschluss einer unter den Verfestigungsbedingungen zur Oxidation befähigten Verbindung, insbesondere unter Ausschluss von Sauerstoff, erfolgt.

15. Verfahren nach einem der vorangehenden Ansprüche, **dadurch gekennzeichnet, dass** die Verfestigung der Beschichtung unter einer Inertgasatmosphäre oder in einer inerten Flüssigkeit, insbesondere enthaltend Glycerin, erfolgt.

16. Verfahren nach einem der vorangehenden Ansprüche, **dadurch gekennzeichnet, dass** die verfestigbare erste und/oder zweite Formulierung
a) mindestens ein Polyester- und/oder Polyetherurethan(meth)acrylat und/oder
b) mindestens ein monomeres oder oligomeres Di(meth)acrylat auf der Basis von Bisphenol A oder Bisphenol F sowie
c) mindestens ein monofunktionelles (Meth)acrylat und
d) mindestens einen Photoinitiator und optional
e) mindestens einen Zusatzstoff umfasst.

17. Verfahren nach Anspruch 16, **dadurch gekennzeichnet, dass**
die Komponente a) mindestens ein Polyesterurethanacrylat, die Komponente b) ein zweibis zehnfach ethoxyliertes Bisphenol-A-Dimethacrylat oder eine beliebige Mischung solcher Dimethacrylate, die Komponente c) Tetrahydrofurfurylmethacrylat und/oder die Komponente d) mindestens ein Phosphinoxyd-Derivat darstellen.

18. Verfahren nach Anspruch 16 oder 17, **dadurch gekennzeichnet, dass**
die verfestigbare Formulierung etwa 40 bis 70 Gewichtsprozent an Komponente a), etwa 5 bis 30 Gewichtsprozent an Komponente b), etwa 20 bis 40 Gewichtsprozent an Komponente c), etwa und 0,1 bis 2 Gewichtsprozent an Komponente d) und etwa 0 bis 20 Gewichtsprozent an Komponente e) enthält, wobei die Summe der Komponenten a) bis e) stets 100 Gewichtsprozent ergibt.

19. Medizintechnische Formkörper, erhältlich nach einem der vorangehenden Ansprüche.

20. Medizintechnischer Formkörper nach Anspruch 19, **dadurch gekennzeichnet, dass** dieser ein Ohrpassstück, eine Otoplastik, eine Ohrschale oder ein Ohrstück oder einen Bestandteil hiervon darstellt.

21. Verwendung der Formkörper nach Anspruch 19 als Ohrpassstücke, Otoplastiken, Ohrschalen oder Ohrstücke oder als Bestandteil hiervon.

22. Verfestigbare Formulierung, umfassend
a) mindestens ein Polyester- und/oder Polyetherurethan(meth)acrylat und/oder
b) mindestens ein monomeres oder oligomeres Di(meth)acrylat auf der Basis von Bisphenol A oder Bisphenol F sowie
c) mindestens ein monofunktionelles (Meth)acrylat,
d) mindestens einen Photoinitiator und optional
e) mindestens einen Zusatzstoff.

23. Formulierung nach Anspruch 22, **dadurch gekennzeichnet, dass**
die Komponente a) mindestens ein Polyesterurethanacrylat, die Komponente b) ein zweibis zehnfach ethoxyliertes Bisphenol-A-dimethacrylat oder eine beliebige Mischung solcher Dimethacrylate, die Komponente c) Tetrahydrofurfurylmethacrylat und/oder die Komponente d) ein Phosphinoxyd-Derivat darstellen.

24. Formulierung nach Anspruch 22 oder 23, **dadurch gekennzeichnet, dass**
die verfestigbare Formulierung etwa 40 bis 70 Gewichtsprozent an Komponente a), etwa 5 bis 30 Gewichtsprozent an Komponente b), etwa 20 bis 40 Gewichtsprozent an Komponente c), etwa 0,1 bis 2 Gewichtsprozent an Komponente d) und etwa 0 bis 20 Gewichtsprozent an Komponente e) umfasst, wobei die Summe der Komponenten a) bis e) stets 100 Gewichtsprozent ergibt.
